# EUROPÄISCHE PATENTSCHRIFT

(11) **EP 1 905 526 B1**
(45) Veröffentlichungstag und Bekanntmachung des Hinweises auf die Patenterteilung: **29.12.2010**
(21) Anmeldenummer: 07013271.7
(22) Anmeldetag: 06.07.2007
(51) Int. Cl.: B23D 51/12, B23D 71/06

(54) **Spanendes Handwerkzeug, insbesondere Handfeile oder Handraspel**
Manual chipping tool, in particular hand file or rasp
Outil manuel d'enlèvement des coupeaux, en particulier lime à main ou râpe à main

(30) Priorität: 29.09.2006 DE 102006046322
(43) Veröffentlichungstag der Anmeldung: 02.04.2008
(73) Patentinhaber: Irwin Industrial Tools GmbH, 85399 Hallbergmoos (DE)
(72) Erfinder: Field, Robert, 81679 München (DE); Strauss, Ralf, Huntersville, NC 28078 (US)
(74) Vertreter: Schmid, Nils T.F.

(56) Entgegenhaltungen:
- DE-A1- 10 228 414
- US-B1- 6 939 089

## Beschreibung

Die Erfindung betrifft ein spanendes Handwerkzeug, wie eine Handfeile oder eine Handraspel. Zum spanabhebenden Bearbeiten von Werkstoffen, wie Metall, Holz oder dergleichen, umfaßt das Spanwerkzeug ein Spanblatt, mit einer spanabhebenden Bearbeitungsfläche, die bei Betätigung des Handwerkzeugs stets unterhalb - bei zur Bearbeitungsfläche lotrechter Blickrichtung - des Greifbereichs des Werkzeugs liegt. Zum Greifen des Werkzeugs ist ein Träger vorgesehen, an dem das Spanblatt lösbar angebracht ist. Zum Befestigen und Verspannen des Spanblatts an dem Träger ist ein Spannmechanismus vorgesehen, der eine manuell zu bedienende Spannschraube und einen relativ zum Träger bewegbaren Schlitten mit einem zur Spannschraube passenden Gegengewinde aufweist.

Ein derartiges spanendes Werkzeug ist beispielsweise aus US 6,939,089 B1 bekannt. Bei der bekannten Handfeile kann das Feilenblatt, je nach dem welcher Bearbeitungsschritt am Werkstück notwenig ist, ausgetauscht werden. Dazu wird die Spannschraube gelöst, wodurch ein an dem Feilenblatt ausgebildeter Greifhaken aus dem Eingriff mit einer Greifaussparung am Träger gelangt.

Es stellte sich als nachteilig bei der bekannten Handfeile heraus, daß nach Bearbeitungsschritten ein Austausch der Feile sehr schwierig und nur mit großem Kraftaufwand bei der Betätigung der Spannschraube möglich ist. Bei längeren Arbeitsschritten kam es sogar dazu, daß ein manuelles Lösen der Spannschraube überhaupt nicht mehr möglich ist.

Es ist Aufgabe der Erfindung, die Nachteile des Stands der Technik zu überwinden, insbesondere ein spanendes Handwerkzeug mit einem austauschbaren Spanblatt und einem Spannmechanismus dahingehend zu verbessern, daß der Austauschvorgang deutlich erleichtert ist.

Diese Aufgabe ist durch die Merkmale des Anspruchs 1 gelöst. Danach ist der Schlitten, die Spannschraube und eine zwischen dem Schlitten und der Spannschraube angeordnete Dichtung vorgesehen, um einen hermetisch abgedichteten Hohlraum zu begrenzen, in dem das Gewinde der Spannschraube zumindest im gespannten Zustand des Spannmechanismus vollständig liegt. Erfindungsgemäß wird der Spanngewindeeingriff zwischen dem Schlitten und der Spannschraube stets hermetisch von der Arbeitsumgebung isoliert, so daß Spanpartikel und/oder Feuchtigkeit nie in den Bereich beider Gewindeläufe gelangen können. Es stellte sich heraus, daß mit der erfindungsgemäßen Maßnahme der Kraftaufwand zum Lösen der Spannschraube und zum Befestigen der Spannschraube auch bei langen Bearbeitungsvorgängen mit dem spanenden Werkzeug kaum erschwert wird. Es zeigte sich, daß bei den ungedichteten bekannten Spanwerkzeugen der immer größer werdende Kraftaufwand zum Lösen der Spannschraube aufgrund von dem beim spanenden Benutzen des Werkzeugs entstehenden aggressiven Umgebungsmedium aus Spanpartikeln und Feuchtigkeit verursacht wird. Schon mikroskopisch kleine, mit dem Auge kaum erkennbare Späne, die in die Gewindenute gelangen, führen zu einer Verstopfung des Gewindeverlaufs. Erst bei intensiver Begutachtung der Gewindenuten der Schraube und des Schlittens konnte eine derartige Verstaubung und Verstopfung des Gewindegangs an der Spannschrauben festgestellt werden. Durch das erfindungsgemäßen hermetische Abdichten des den gesamten Gewindeverlauf einschießenden Hohlraums kann das Verstopfen und Verstauben und damit das Festfressen der Schraube am Schlitten vollständig ausgeschlossen werden.

Bei einer bevorzugten Ausführung der Erfindung liegt das Gewinde der Spannschraube auch im ungespannten Zustand des Spannmechanismus innerhalb des Hohlraums. Auf diese Weise ist gewährleistet, daß das Gewinde zu keinem Zeitpunkt, also auch im unbetätigten Zustand, verschmutzt wird. Eine Ausfallwahrscheinlichkeit der Austauschbarkeitsfunktion der Spanplatte ist somit deutlich reduziert.

Vorzugweise ist die Dichtung ein O-Ring aus elastischem Werkstoff. Der O-Ring ist so angeordnet, daß ihm eine Dichtfläche gegenüberliegt. Dabei kann der O-Ring sowohl an der Schraube als auch an dem umgebenden Schlitten angeordnet sein. Die jeweilige Dichtfläche liegt jeweils an dem dem O-Ring gegenüberliegenden Flächenabschnitt.

Bei einer bevorzugten Ausführung der Erfindung weist die Spannschraube einen gewindefreien Schaft zwischen einem Betätigungskopf und dem Gewinde auf. Dabei ist an dem gewindefreien Schaft eine Nut zur Aufnahme der Dichtung, insbesondere des O-Rings, ausgebildet. Selbstverständlich kann bei einer alternativen Ausführung die Nut auch in einem Innenwandabschnitt des Schlittens ausgebildet sein.

Vorzugsweise ist der Schlitten längs der Spanrichtung des Spannmechanismus insbesondere translatorisch geführt.

Bei einer bevorzugten Ausführung der Erfindung hat das Spanblatt zwei Greifhaken, die zum Verspannen des Spanblatts mit insbesondere formkomplementär ausgebildeten Greifhakenaussparungen in Eingriff kommen, von denen eine Greifhakenaussparung an einem Träger und die andere an dem Schlitten ausgebildet sind.

Vorzugsweise sind die Greifhaken am Ende des Spanblatts ausgebildet. Bei einer Weiterbildung der Erfindung ist der Schlitten in Form eines Sacklochkörpers mit einem Innengewinde versehen, wobei an einer Zugangsöffnung des Sacklochkörpers ein gewindefreier Flächenabschnitt zur Bildung einer Dichtungsfläche vorgesehen ist, die insbesondere der Dichtung, insbesondere dem O-Ring, gegenüberliegt.

Weiterhin sind der Schlitten und die Spannschraube und gegebenenfalls der Träger aus einem Kunststoff gefertigt, insbesondere gespritzt.

Weitere Vorteile, Eigenschaften und Merkmale der Erfindung werden durch die folgende Beschreibung bevorzugter Ausführungen anhand der beiliegenden Zeichnungen deutlich, in denen zeigen:
- Fig 1a: eine Schnittansicht einer erfindungsgemäßen Handfeile entlang der Schnittlinie A-A gemäß Fig. 1c, wobei das Spanblatt demontiert ist;
- Fig. 1b: eine Schnittansicht der Handfeile gemäß Fig. 1a entlang der Schnittlinie B-B gemäß Fig. 1a;
- Fig. 1c: eine Seitenansicht der Handfeile gemäß den Figuren 1a und 1b;
- Fig. 1d: eine Draufsicht der Handfeile gemäß den Figuren 1a bis 1c;
- Fig. 1e: eine perspektivische Ansicht der Handfeile gemäß den Figuren 1a bis 1d;
- Fig. 2a: eine Schnittansicht der erfindungsgemäßen Handfeile gemäß Fig. 1a entlang der Schnittlinie A-A gemäß Fig. 2c, wobei das Spanblatt an den Träger mon- tiert ist;
- Fig. 2b: eine Schnittansicht entlang der Schnittlinie B-B gemäß Fig. 2a;
- Fig. 2c: eine Seitenansicht der Handfeile gemäß den Figuren 2a und 2b;
- Fig. 2d: eine Draufsicht der Handfeile gemäß den Figuren 2a bis 2c;
- Fig. 2e: eine perspektivische Ansicht der Handfeile gemäß den Figuren 2a bis 2d;
- Fig. 2f: eine vergrößerte Schnittansicht der Handfeile gemäß dem Detailbereich F nach Fig. 2a;
- Fig. 3a: eine Schnittansicht einer Handfeile gemäß den Figuren 1a und 1b entlang der Schnittlinie A-A gemäß Fig. 3c, wobei die Spanplatte und die Spannschraube demontiert sind;
- Fig. 3b: eine Schnittansicht der Handfeile gemäß Fig. 3a entlang der Schnittlinie B-B nach Fig. 3a;
- Fig. 3c: eine Seitenansicht der Handfeile gemäß den Figuren 3a und 3b;
- Fig. 3d: eine Draufsicht der Handfeile gemäß den Figuren 3a bis 3c;
- Fig. 3e: eine perspektivische Ansicht der Handfeile gemäß den Figuren 3a bis 3d;
- Fig. 3f: eine vergrößerte Schnittansicht der Handfeile gemäß dem Detailbereich F nach Fig. 3a, wobei das Spanblatt in einer von dem Träger gelösten Position darge- stellt ist;
- Fig. 4a: eine Schnittansicht einer erfindungsgemäßen Handfeile in einer weiteren Aus- führung entlang der Schnittlinie A-A nach Fig. 4b, wobei das Spanblatt demon- tiert ist;
- Fig. 4b: eine Seitenansicht der Handfeile gemäß Fig. 4a,
- Fig. 4c: eine perspektivische Ansicht der Handfeile gemäß den Figuren 4a und 4b;
- Fig. 4d: eine Draufsicht der Handfeile gemäß den Figuren 4a bis 4c;
- Fig. 4e: eine vergrößerte Schnittansicht der Handfeile gemäß dem Detailbereich E ge- mäß Fig. 4a;
- Fig. 5a: eine Schnittansicht der Handfeile gemäß Fig. 4a entlang der Schnittlinie A-A gemäß Fig. 5b, wobei das Spanblatt eingespannt ist;
- Fig. 5b: eine Seitenansicht der Handfeile gemäß Fig. 5a;
- Fig. 5c: eine perspektivische Ansicht der Handfeile gemäß den Figuren 5a und 5b;
- Fig. 5d: eine Draufsicht der Handfeile gemäß den Figuren 5a bis 5c;
- Fig. 5e: eine vergrößerte Schnittansicht der Handfeile gemäß dem Detailbereich E nach Fig. 5a;
- Fig. 6a: eine Schnittansicht der Handfeile gemäß den Figuren 4a und 5a entlang der Schnittlinie A-A gemäß Fig. 6b;
- Fig. 6b: eine Seitenansicht der Handfeile gemäß Fig. 6a;
- Fig. 6c: eine perspektivische Ansicht der Handfeile gemäß den Figuren 6a und 6b;
- Fig. 6d: eine Draufsicht der Handfeile gemäß den Figuren 6a bis 6c;
- Fig. 6e: eine vergrößerte Schnittansicht der Handfeile gemäß dem Detailbereich E nach Fig. 6a.

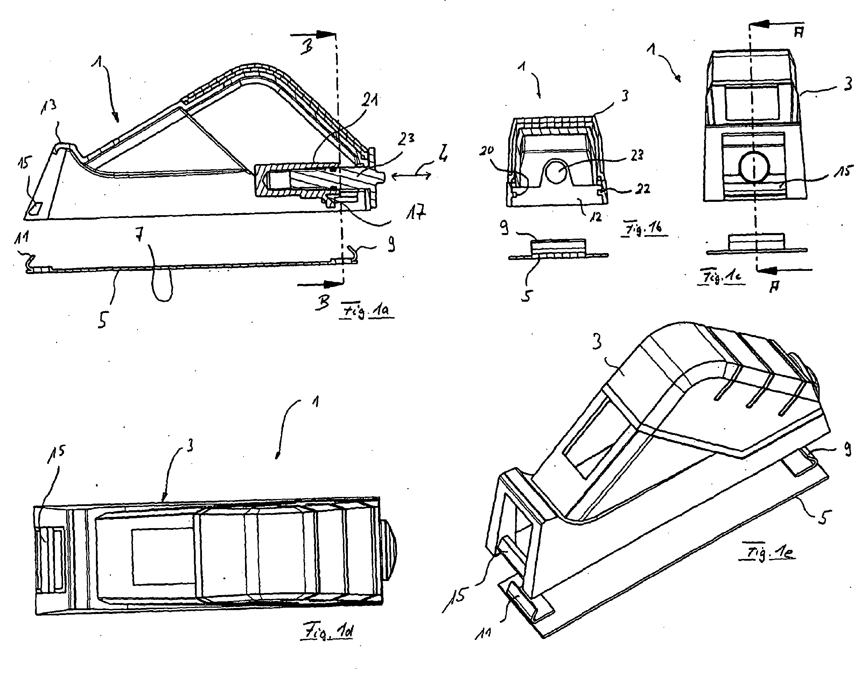

In den Figuren 1a bis 1e, 2a bis 2f und 3a bis 3f ist eine erfindungsgemäße Handfeile in einer ersten Ausführung mit der Bezugsziffer 1 versehen.

Die Handfeile 1 umfaßt einen für ein einhändiges Greifen formangepaßten Tragkörper 3 aus Kunststoff, der mittels Seitenwänden und Deckelbereichen einen Innenhohlraum begrenzt. An der Unterseite des Tragkörpers ist ein Feilenblatt 5 mit einer einem nicht dargestellten Werkstück zuzuwendenden Bearbeitungsfläche 7 an dem Träger 3 fest anbringbar.

Zum Befestigen des Feilblatts 5 ist an dessen Enden jeweils zwei aufeinander zu weisende Greifhaken 9, 11 einstückig mit dem Material des Feilblatts 5 vorgesehen. Der Greifhaken 11 ist dem vorderen Bereich 13 der Handfeile 1 zuzuordnen und greift in einen die beiden Seitenwände verbindenden Steg 15 formschlüssig ein, so daß bei einer Zugbelastung in Längsrichtung des Feilblatts 5 der Greifhaken 11 selbstarretierend den Steg 15 umgreift.

Der am hinteren Ende des Feilblatts 5 ausgebildete Greifhaken 9 greift in eine Greifhakenaussparung 17, die in einem in Längsrichtung L der Handfeile 1 verschiebbaren Schlitten 21 ausgebildet ist. Der Schlitten 21 ist als sacklochförmiger Körper ausgebildet und umfaßt an dessen Unterseite die Greifhakenaussparung 17, die formschlüssig mit dem Greifhaken 9 in Eingriff kommen kann, um das Spanblatt 5 einzuspannen. Zudem hat der Schlitten 21 seitlich Führungsnute 20, in die eine am Tragkörper 3 ausgebildete, ortsfeste Führungsschiene 22 greift.

Der Schlitten 21 umfaßt ein Innengewinde, das mit einem Außengewinde einer Spannschraube 23 zusammenwirkt. Bei Betätigung der Spannschraube 23 wird der Schlitten 21 in Längsrichtung L der Handfeile 1 verlagert, während die Spannschraube 23 relativ zum Tragkörper 3 in Längsrichtung L ortsfest bleibt.

Im Innenbereich der Zugangsöffnung des Schlittens 21 ist eine Dichtfläche ausgebildet, die mit einem in einer Nut 31 sitzenden O-Ring 33 derart dichtend zusammenwirkt, daß ein hermetisch abgedichteter Hohlraum 35 innerhalb des Schlittens 21 erzeugt ist. In dem Hohlraum befindet sich der ganze Gewindeverlauf sowohl des Schlittens 21 als auch der Spannschraube 23.

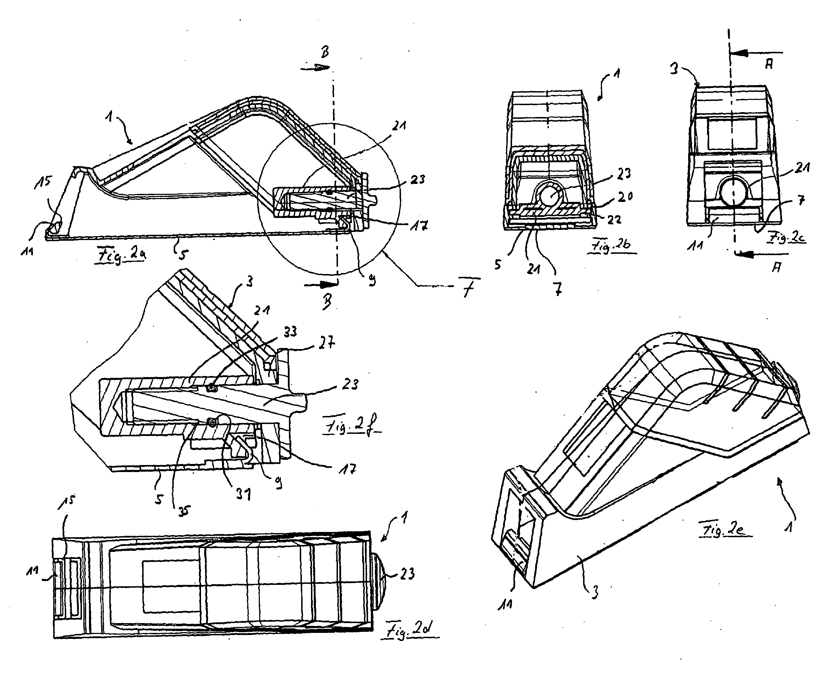

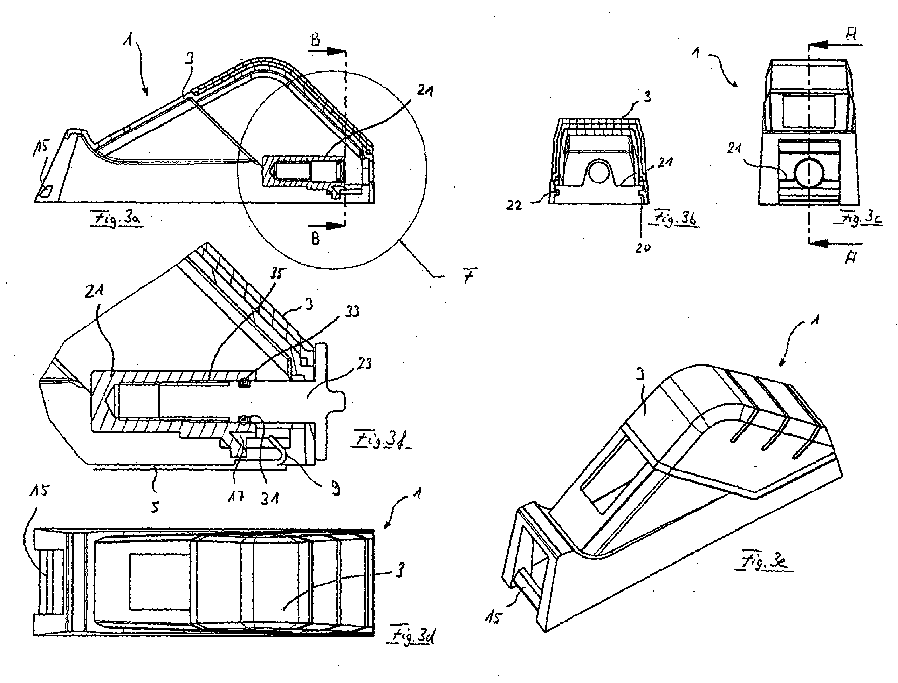

In den Figuren 2a bis 2f ist der gespannte Zustand des Feilblatts 5 dargestellt, denn die Spannschraube 23 ist weit in den Schlitten 21 eingedreht, so daß der Schlitten 21 hin zum hinteren Endbereich 27 des Trägers 3 verlagert ist. Zum Lösen des Feilblatts 5, was in den Figuren 3a bis 3f gezeigt ist, wird die Spannschraube 23 derart betätigt, daß sich der Schlitten 21 von dem hinteren Endbereich 27 wegbewegt, so daß der Greifhaken 9 des Feilblatts 5 aus dem Eingriff mit der Greifhakenaussparung 17 gelangt. Anschließend kann das Feilblatt ohne weiteres von dem Trägerkörper durch Lösen auch des Greifhakens 11 von dem Steg 15 abgenommen werden.

Durch die Dichtung mittels des O-Rings wird es möglich, die Gewinden der Spannschraube 21 des Schlittens vor Staub und spanabhebenden Werkstückteilchen zu schützen. Damit ist gewährleistet, daß ein Austauschen der Spanplatte auch bei häufigem Benutzen der Handfeile einfach und ohne großen Kraftaufwand möglich bleibt.

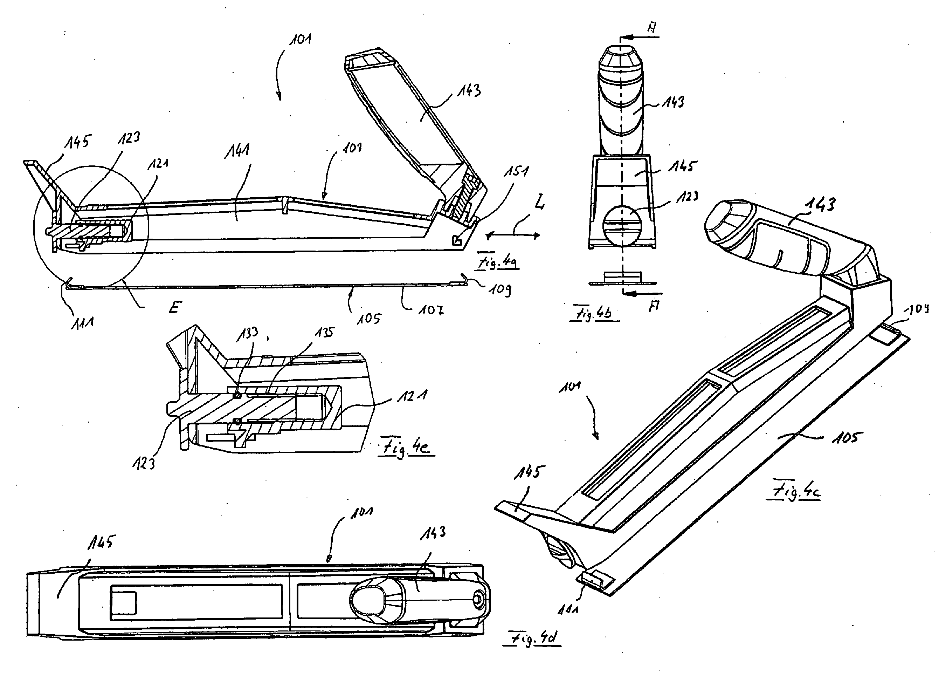

In den Figuren 4a bis 4e, 5a bis 5e und 6a bis 6e ist eine weitere erfindungsgemäße Ausführung einer Handfeile dargestellt, wobei zur einfachen Lesbarkeit der Figurenbeschreibung im Hinblick auf die Ausführung mit den Figuren 1 und 3 für ähnliche oder identischen Bauteile der Handfeile die gleichen Bezugsziffern verwendet werden, die um 100 erhöht sind.

Die Handfeile 101 unterscheidet sich von der Handfeile 1 gemäß den Figuren 1 bis 3 vor allem in ihren Abmessungen, denn sie umfaßt eine wesentlich größere Längsausdehnung. Auch der Tragkörper 103 ist unterschiedlich ausgebildet und umfaßt einen im wesentlichen niedrigen und langgestreckten Mittelteil 141, an dessen Enden ein zylinderförmiger Hauptgriff 143 und ein kleinerer, flacher Nebengriff 100 fest angebracht sind. Sowohl der Hauptgriff 143 als auch der Nebengriff 145 sind zur Bearbeitungsfläche 107 des Feilblatts 105 schräg geneigt, insbesondere in einem Winkel von etwa 60 bis 70 Grad. Der Hauptgriff 143 ist an dem Mittelteil 141 angeschraubt.

Die Tragkörperanordnung der Handfeile 101 ist ähnlich einem Handhobel ausgeführt, wobei die Handfeile mit einer Hand am Hauptgriff 143 und mit der anderen Hand am Nebengriff 145 zweihändig betätigt wird, um die Handfeile in Längsrichtung L hin und her zu bewegen.

Erfindungsgemäß hat die Handfeile 101 einen Spannmechanismus, um das Feilblatt 105 an dem Tragkörper 103 einzuspannen. Hierzu umfaßt der Spannmechanismus auf der Seite des Hauptgriffs 143 einen Eingriffssteg 151, der mit dem Greifhaken 109 der Feilplatte 105 beim gespannten Zustand zusammenwirkt. Ebenso wie die Ausführung gemäß den Figuren 1 bis 3 umfaßt der Spannmechanismus der Handfeile 101 einen Schlitten 121, der im Bereich des Nebengriffs am Tragkörper 103 translatorisch geführt ist. Der sacklochförmige Schlitten 121 umfaßt ein Innengewinde, das mit einem Außengewinde der Spannschraube 123 in Eingriff steht. Um einen hermetisch abgedichteten Hohlraum 135 zu erstellen, ist zwischen der Spannschraube 123 und dem Schlitten 121 im Bereich der Zugangsöffnung des Schlittens 121 am gewindefreien Schaft der Spannschraube 123 ein O-Ring 133 eingesetzt.

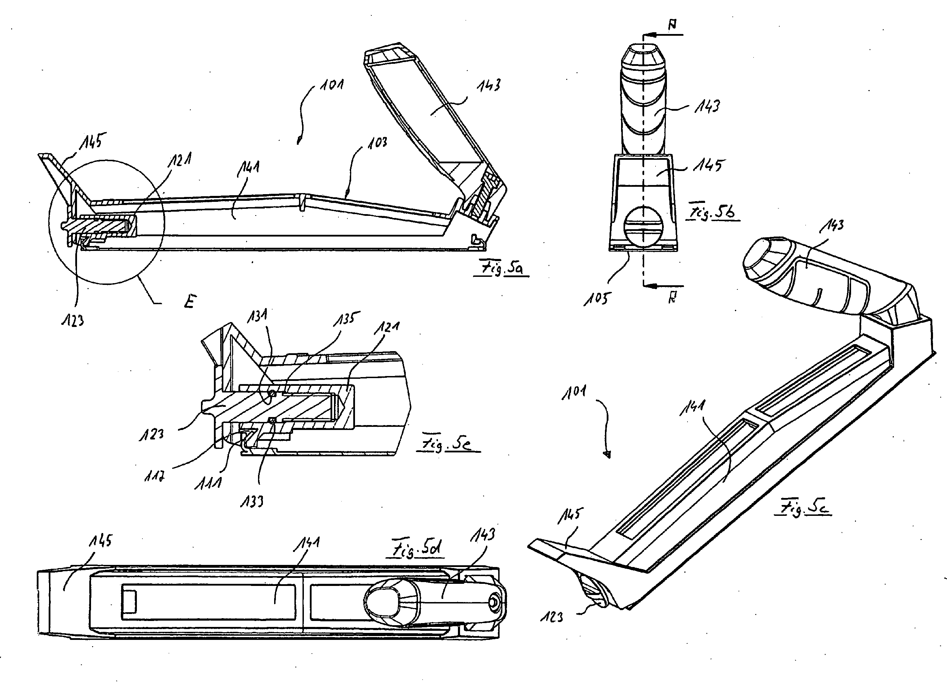

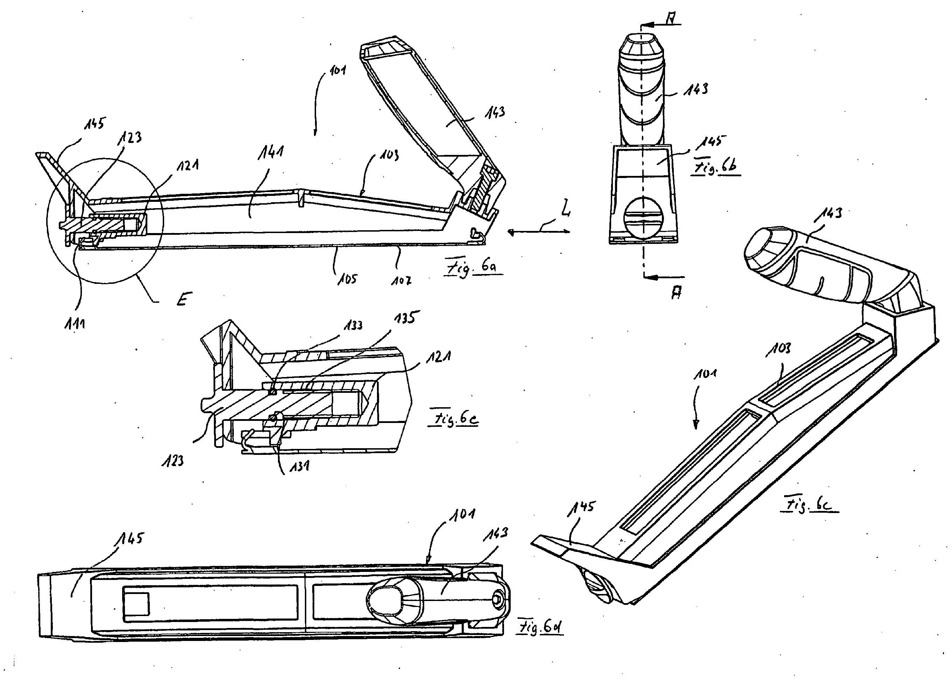

Um das Feilblatt 105 an dem Tragkörper 103 einzuspannen, wird zuerst der Greifhaken 109 an dem Eingriffssteg 151 plaziert, anschließend wird die Feilplatte gegen den Tragkörper 103 gedrückt und gleichzeitig die Spannschraube 123 derart betätigt, daß sich der Schlitten 121 von dem Nebengriff 145 weg zur gegenüberliegenden Seite in Längsrichtung L bewegt (vergleiche Figuren 5a und 5e mit Figuren 6a und 6e). Zum Spannen des Feilblatts 105 greift der Greifhaken 111 in die Greifhakenaussparung 117 am Schlitten 121 an.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1,101: Handfeile
- 3, 103: Tragkörper
- 5, 105: Feilblatt
- 7,107: Bearbeitungsfläche
- 9,11, 109, 111: Greifhaken
- 13: vorderer Bereich
- 15: Steg
- 17, 117: Greifhakenaussparung
- 20: Führungsnute
- 21, 121: Schlitten
- 22: Führungsschiene
- 23, 123: Spannschraube
- 27: Endbereich
- 31: Nut
- 33, 133: O-Ring
- 35: Hohlraum
- 141: Mittelteil
- 143: Hauptgriff
- 145: Nebengriff
- 151: Eingriffssteg
- L: Längsrichtung

## Patentansprüche

1. Spanendes Handwerkzeug, insbesondere Handfeile (1, 101) oder Handraspel, mit einem Spanblatt, wie einem Feilblatt (5, 105) oder einem Messerblatt, das an einem mit einer Hand greifbaren Träger lösbar angebracht ist, dessen manueller Betätigungsbereich im Betrieb des Werkzeugs über dem Spanblatt liegt, und einem Spannmechanismus zum Befestigen und Verspannen des Spanblatts an dem Träger, wobei der Spannmechanismus eine manuell zu bedienende Spannschraube und einen relativ zum Träger bewegbaren Schlitten (21, 121) mit einem Gegengewinde aufweist, der mit der Spannschraube (23, 123) im Eingriff steht, **dadurch gekennzeichnet, daß** der Schlitten (21, 121), die Spannschraube (23, 123) und eine zwischen dem Schlitten (21, 121) und der Spannschraube (23, 123) angeordnete Dichtung einen hermetisch abgedichteten Hohlraum (35, 135) begrenzen, in dem das Gewinde der Spannschraube (23 123) zumindest im gespannten Zustand des Spannmechanismus vollständig liegt.

2. Handwerkzeug nach Anspruch 1 **dadurch gekennzeichnet, daß** das Gewinde der Spannschraube (23, 123) auch im ungespannten Zustand des Spannmechanismus innerhalb des Hohlraums (35, 135) liegt.

3. Handwerkzeug nach Anspruch 1 oder 2, **dadurch gekennzeichnet, daß** die Dichtung ein O-Ring (33, 133) aus elastischem Werkstoff ist.

4. Handwerkzeug nach einem der Ansprüche 1 bis 3, **dadurch gekennzeichnet, daß** die Spannschraube (23, 123) einen gewindefreien Schaft zwischen einem Betätigungskopf und dem Gewinde aufweist, wobei an dem gewindefreien Schaft eine Nut zur Aufnahme der Dichtung, insbesondere eines O-Rings (33, 133), ausgebildet ist.

5. Handwerkzeug nach einem der Ansprüche 1 bis 4, **dadurch gekennzeichnet, daß** der Schlitten (21, 121) längs der Spannrichtung des Spannmechanismus an dem Träger geführt ist.

6. Handwerkzeug nach einem der Ansprüche 1 bis 5, **dadurch gekennzeichnet, daß** das Spanblatt zwei Greifhaken (9, 11, 109, 111) aufweist, von denen zumindest einer zum Verspannen des Spanblatts mit einer insbesondere formkomplementär ausgebildeten Greifhakenaussparung in Eingriff kommt, die an dem Schlitten (21, 121) ausgebildet ist.

7. Handwerkzeug nach Anspruch 6, **dadurch gekennzeichnet, daß** die Greifhaken (9, 11, 109, 111) am Ende des Spanblatts ausgebildet sind.

8. Handwerkzeug nach einem der Ansprüche 1 bis 7. **dadurch gekennzeichnet, daß** der Schlitten (21, 121) in Form eines Sacklochkörpers mit einem Innengewinde ausgebildet ist, wobei an einer Zugangsöffnung des Sacklochkörpers ein gewindefreier Flächenabschnitt zur Bildung einer Dichtungsfläche vorgesehen ist.

9. Handwerkzeug nach einem der Ansprüche 1 bis 8, **dadurch gekennzeichnet, daß** der Schlitten (21, 121) und die Spannschraube (23, 123) und gegebenenfalls der Träger aus einem Kunststoff gefertigt, insbesondere gespritzt, sind.

## Claims

1. Cutting hand tool, in particular hand file (1, 101) or hand rasp, with a cutting blade such as a file blade (5, 105) or a knife blade detachably fixed to a support to be held by one hand, a manually actuating area of the support being located above the cutting blade during operation of the tool; and with a tensioning mechanism for fixing and bracing the cutting blade on the support, wherein the tensioning mechanism has a manually operable tensioning screw and a carriage (21, 121) that is movable relative to the support, has a counter thread, and is in engagement with the tensioning screw (23, 123), **characterised in that** the carriage (21, 121), the tensioning screw (23,1 23) and a seal disposed between the carriage (21, 121) and the tensioning screw (23, 123) delimit a hermetically sealed cavity (35, 135) in which the thread of the tensioning screw (23, 123) is completely lodged at least in a tensioned state of the tensioning mechanism.

2. Hand tool according to claim 1, **characterised** that the thread of the tensioning screw (23, 123) is lodged within the cavity (35, 135) also in an untensioned state of the tensioning mechanism.

3. Hand tool according to claim 1 or 2 **characterised in that** the seal is an O-ring (33, 133) made of elastic material.

4. Hand tool according to one of the claims 1 to 3, **characterised in that** the tensioning screw (23, 123) features a threadless shaft between an actuating head and the thread, wherein a groove for receiving the seal, in particular an O-ring (33, 133), is formed in the threadless shaft.

5. Hand tool according to one of the claims 1 to 4, **characterised in that** the carrier (21, 121) is guided along the tensioning direction of the tensioning mechanism at the support.

6. Hand tool according to one of the claims 1 to 5, **characterised in that** the cutting blade has two gripper hooks (9, 11, 109, 111) at least one of which engages with a gripper hook recess for tensioning the cutting blade, the gripper hook recess being formed at the carrier (21, 121) and having in particular a complementary shape.

7. Hand tool according to claim 6 **characterised in that** the gripper hooks (9, 11, 109, 111) are formed at the end of the cutting blade.

8. Hand tool according to one of the claims 1 to 7, **characterised in that** the carrier (21, 121) is formed in the shape of a blind-hole body with an internal thread, wherein a threadless surface area section is provided at an access opening of the blind-hole body in order to form a sealing surface.

9. Hand tool according to one of the claims 1 to 8, **characterised in that** the carrier (21, 121) and the tensioning screw (23, 123) and, if appropriate, the support are manufactured, in particular injection moulded, from plastic.

## Revendications

1. Outil d'enlèvement de copeaux, en particulier lime à main (1, 101) ou râpe à main, comprenant une lame à copeaux, comme une lame à limer (5, 105) ou une lame de couteau, qui est placée de façon amovible sur un support saisissable avec une main, dont la zone d'actionnement manuel se situe au-dessus de la lame à copeaux pendant le fonctionnement de l'outil, et un mécanisme de serrage pour la fixation et le serrage de la lame à copeaux sur le support, le mécanisme de serrage présentant une vis de serrage à commander manuellement et un coulisseau (21, 121) déplaçable par rapport au support avec un contre-filetage, qui est en prise avec la vis de serrage (23, 123), **caractérisé en ce que** le coulisseau (21, 121), la vis de serrage (23, 123) et un joint disposé entre le coulisseau (21, 121) et la vis de serrage (23, 123) délimite une cavité (35, 135) étanchéifiée de façon hermétique, dans laquelle le filetage de la vis de serrage (23, 123) est disposé complètement au moins lorsque le mécanisme de serrage est serré.

2. Outil selon la revendication 1, **caractérisé en ce que** le filetage de la vis de serrage (23, 123) est disposé à l'intérieur de la cavité (35, 135) également lorsque le mécanisme de serrage n'est pas serré.

3. Outil selon la revendication 1 ou 2, **caractérisé en ce que** le joint est un joint torique (33, 133) à base de matériau élastique.

4. Outil selon l'une quelconque des revendications 1 à 3, **caractérisé en ce que** la vis de serrage (23, 123) présente une tige sans filetage entre une tête d'actionnement et le filetage, une rainure étant réalisée sur la tige sans filetage pour le logement du joint, en particulier d'un joint torique (33, 133).

5. Outil selon l'une quelconque des revendications 1 à 4, **caractérisé en ce que** le coulisseau (21, 121) est guidé sur le support le long du sens de serrage du mécanisme de serrage.

6. Outil selon l'une quelconque des revendications 1 à 5, **caractérisé en ce que** la lame à copeaux présente deux crochets de préhension (9, 11, 109, 111), dont au moins l'un vient en prise pour le serrage de la lame à copeaux avec un évidement de crochet de préhension formé en particulier de façon complémentaire au niveau de la forme, lequel crochet est conçu sur le coulisseau (21, 121).

7. Outil selon la revendication 6, **caractérisé en ce que** les crochets de préhension (9, 11, 109, 111) sont conçus sur l'extrémité de la lame à copeaux.

8. Outil selon l'une quelconque des revendications 1 à 7, **caractérisé en ce que** le coulisseau (21, 121) est conçu sous la forme d'un corps à trou borgne avec un filetage intérieur, une partie de surface sans filetage pour la formation d'une surface d'étanchéité étant prévue sur une ouverture d'accès du corps à trou borgne.

9. Outil selon l'une quelconque des revendications 1 à 8, **caractérisé en ce que** le coulisseau (21, 121) et la vis de serrage (23, 123) et éventuellement le support sont fabriqués, en particulier injectés, dans un plastique.
